# EUROPEAN PATENT APPLICATION

(11) **EP 3 211 760 A1**
(43) Date of publication of application: **30.08.2017**
(21) Application number: 17157449.4
(22) Date of filing: 22.02.2017
(51) Int. Cl.: H02K 1/18, H02K 5/16

(54) **OUTER-ROTOR MOTOR AND BLOWER HAVING THE SAME**

(30) Priority: 25.02.2016 CN 201610105541
(71) Applicant: Johnson Electric S.A., 3280 Murten (CH)
(72) Inventor: Chu, Jun Jie, Shatin, N.T. (HK); Zhang, Fu Ping, Shatin, N.T. (HK); Zhi, Yan Fang, Shatin, N.T. (HK)
(74) Representative: Hocking, Adrian Niall

(57) **Abstract**

An outer-rotor motor includes a support base (32), a stator (34) attached to the support base (32), and a rotor (36) rotatably mounted to the stator (34). The support base (32) includes a substrate (38) and a bearing holder (40) separately formed and assembled together. A through hole (44) is formed in a central area of the substrate (38). The bearing holder (40) includes a first end engaged with the through hole (44) and a second end protruding in a direction away from the substrate (38).

## Description

### FIELD OF THE INVENTION

This invention relates to a blower, and in particular to an outer-rotor motor for the blower.

### BACKGROUND OF THE INVENTION

Blowers are very popular air drive devices, each of which usually includes a motor to drive an impeller connected to the motor. The impeller in turn drives the air to move to generate an airflow. The impeller is typically driven by an outer-rotor motor. A typical outer-rotor motor includes a support base for supporting stator and fixing of the motor. The support base usually includes a flat substrate and an elongated bearing holder protruding from a center of the substrate. A stator is attached around the bearing holder, a rotary shaft of a rotor is rotatably mounted in the bearing holder, and the substrate is used to fix the motor to another element such as a housing of the blower. However, the substrate and the bearing holder of the support base are typically integrally formed by die casting, which leads to high fabrication cost.

### SUMMARY OF THE INVENTION

Thus, there is a desire for an outer-rotor motor with low cost and a blower having the motor.

In one aspect, an outer-rotor motor is provided which includes a support base, a stator attached to the support base, and a rotor rotatably mounted to the stator. The support base comprises a substrate and a bearing holder separately formed and assembled together. A through hole is formed in a central area of the substrate. The bearing holder comprises a first end engaged with the through hole and a second end protruding in a direction away from the substrate.

Preferably, a recessed portion is formed at the central area of the substrate. The through hole is formed in a central area of the recessed portion, and the through hole has a size less than that of the recessed portion.

Preferably, the first end of the bearing holder extends radially outwardly to form a flange, the bearing holder is inserted into the substrate from a recessed side of the recessed portion, and the flange of the bearing holder abuts against a surface of the recessed portion for axially positioning the bearing holder relative to the substrate.

Preferably, the substrate forms an annular flange at an outer periphery of the through hole, and the annular flange is configured to engage with the bearing holder to improve concentricity between the bearing holder and the substrate.

Preferably, two bearings are disposed in the bearing holder, and a spacer is sandwiched between the two bearings. The spacer has an inner diameter greater than an inner diameter of the bearings, and the first end of the bearing holder extends radially inwardly to form an annular flange to support the bearings.

Preferably, the stator comprises a stator core and windings wound around the stator core. The stator core comprises a yoke and a plurality of teeth extending radially outwardly from the yoke. Each of the teeth comprises a tooth body connected with the yoke and a tooth tip formed at a distal end of the tooth body. The windings are wound around the tooth bodies. A slot opening is formed between each two adjacent tooth tips. The rotor comprises a yoke and a permanent magnet attached to an inner surface of the yoke of the rotor. An inner wall surface of the permanent magnet and outer wall surfaces of the tooth tips are opposed to and spaced from each other to define an air gap therebetween. A width of the slot opening is not greater than two times of a width of the air gap.

Preferably, the permanent magnet is annular. The inner wall surface of the permanent magnet is a cylindrical surface that is continuous in a circumferential direction thereof. The outer wall surfaces of the tooth tips are located on a cylindrical surface that is concentric with the permanent magnet, such that the air gap is even.

Preferably, two circumferential ends of the tooth tip protrude outwardly beyond two sides of the tooth body to form two wing portions, at least one of the two adjacent wing portions at two sides of each slot opening is tilted outwardly before the windings are wound to the tooth bodies, and the tilted wing portion is bent inwardly after the windings are wound.

Preferably, a cutting groove is formed in the wing portion or a connecting area where the wing portion is connected to the tooth body.

Preferably, the substrate is formed by punching.

Preferably, the bearing holder is formed by sintering.

Preferably, the outer-rotor motor is a single-phase outer-rotor motor.

In another aspect, a blower is provided which utilizes the above outer-rotor motor as a driving motor. The blower further includes an impeller driven by the motor, and the impeller is connected with the rotor of the motor.

In comparison with the conventional blower, the support base of the outer-rotor motor utilized in the blower of the present invention includes the separately formed substrate and the bearing holder. Therefore, the substrate and bearing holder can be fabricated by punching and sintering, which can effectively reduce the fabrication cost when compared against die casting.

### BRIEF DESCRIPTION OF THE DRAWINGS

Fig. 1 illustrates a blower according to one embodiment of the present invention.
Fig. 2 illustrates a single-phase outer-rotor motor of the blower of Fig. 1.
Fig. 3 illustrates the motor of Fig. 2, viewed from another aspect.
Fig. 4 is a sectional view of Fig. 3.
Fig. 5 is an exploded view of Fig. 3.
Fig. 6 is a sectional view of a substrate of the motor of Fig. 5.
Fig. 7 illustrates a stator core of the motor of Fig. 5.
Fig. 8 illustrates the stator core of Fig. 7, prior to a winding process.
Fig. 9 illustrates a rotor of the motor of Fig. 5, viewed from another aspect.
Fig. 10 illustrates a permanent magnet, prior to being formed, of the rotor of Fig. 5.
Fig. 11 illustrates a position relationship between the stator and rotor of the motor.
Fig. 12 is an enlarged view of dash-boxed portion of Fig. 11.

### DETAILED DESCRIPTION OF THE PREFERRED EMBODIMENTS

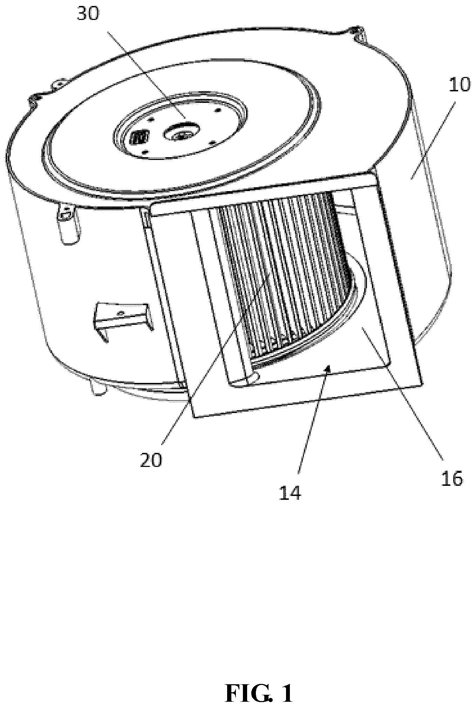

Referring to Fig. 1, a blower in accordance with one embodiment of the present invention includes a housing 10, an impeller 20 disposed within the housing 10, and a driving motor 30 for driving the impeller 20 to rotate.

The blower is preferably a centrifugal blower. The housing 10 of the blower defines an inlet (not shown) at one axial end of the impeller 20, and an outlet 14 at one side of the housing 10, perpendicular to the inlet. The impeller 20 and the housing 10 are radially spaced apart from each other, with a flow passage 16 defined therebetween. The flow passage 16 has a width varying along a circumferential direction of the blower. The motor 30 is preferably a single-phase outer-rotor motor which has a rotor connected with the impeller 20. When the motor 30 starts to drive the impeller 20 to rotate, a negative pressure is formed such that ambient air is sucked into the housing 10 via the inlet. Under the rotation of the impeller 20, the air entering the housing 10 and flowing along the flow passage 16 to the outlet 14 speeds up and is pressurized into a high speed and high pressure airflow that is discharged via the outlet 14.

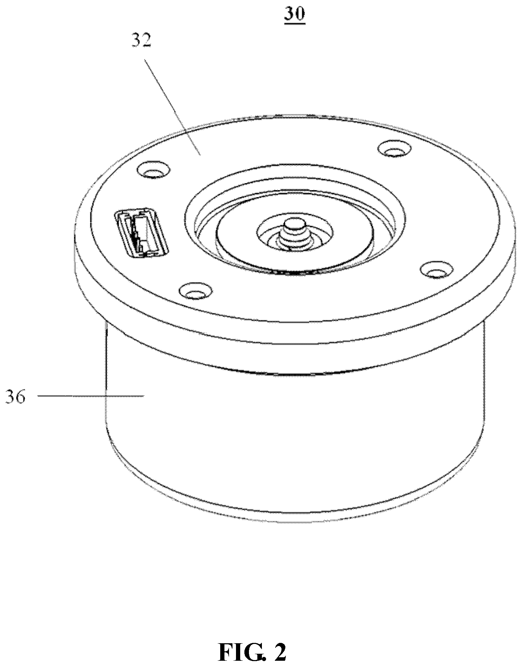

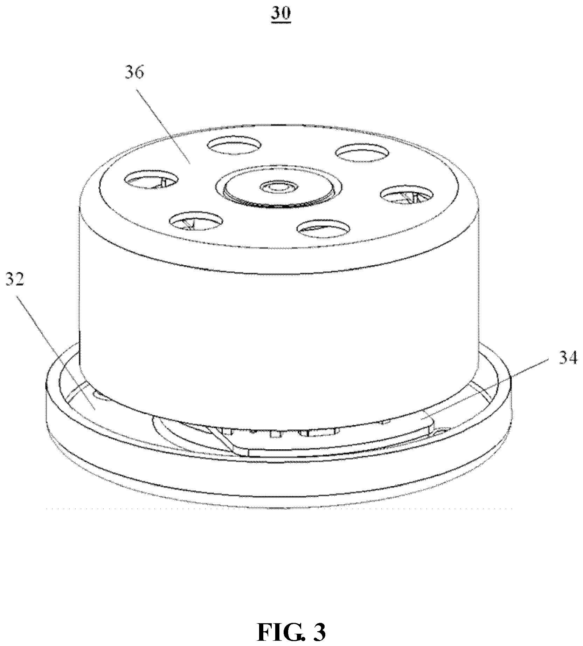

Referring also to Fig. 2 and Fig. 3, the motor 30 includes a support base 32, a stator 34 attached around the support base 32, and a rotor 36 surrounding the stator 34.

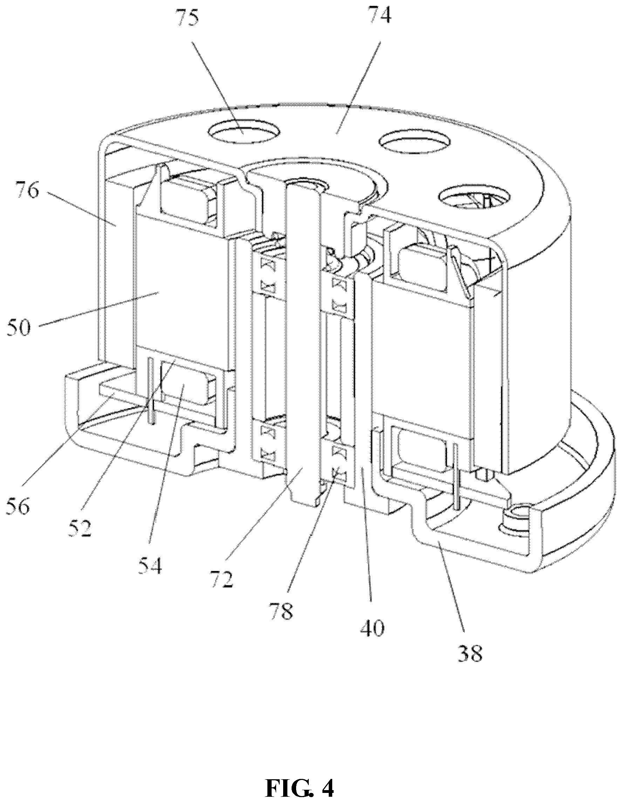

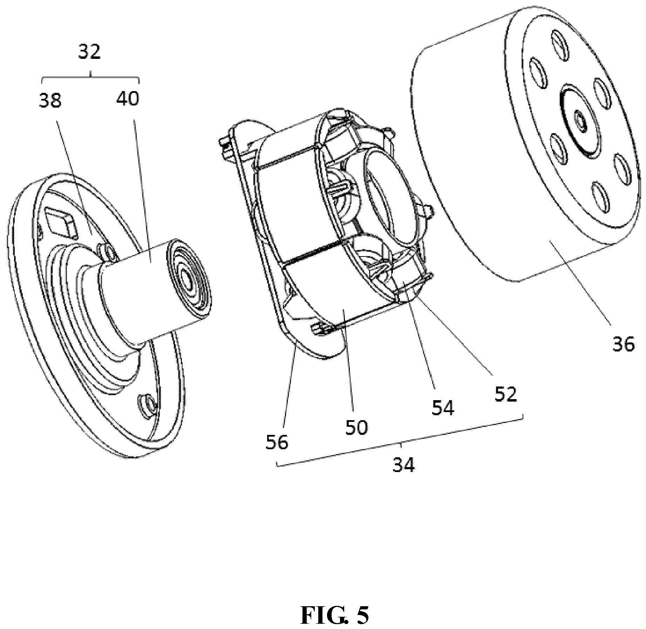

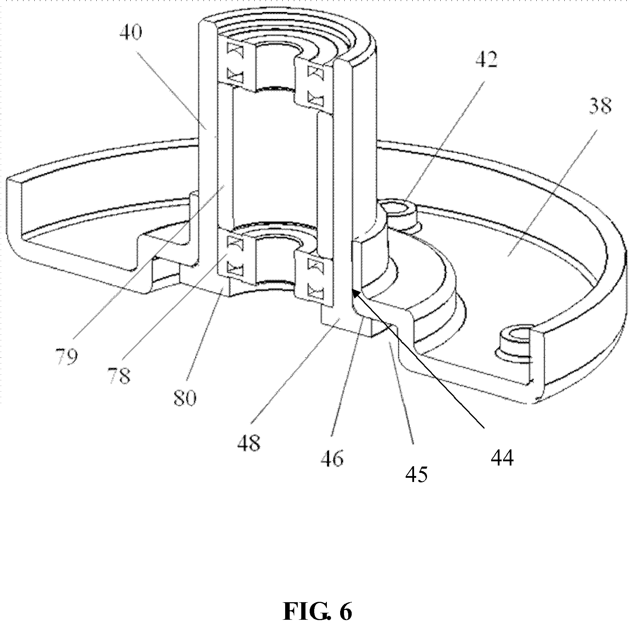

Referring also to Fig. 4 to Fig. 6, the support base 32 includes a substrate 38, and a bearing holder 40 fixedly connected with the substrate 38. The substrate 38 is preferably formed by punching, which has a flat disc shape. The bearing holder 40 is a hollow cylindrical structure formed by sintering. A plurality of fixing posts 42 is formed on the substrate 38 adjacent an outer edge thereof. Fasteners, such as screws, pins or rivets can pass through the fixing posts 42 to connect the motor 30 to another element such as a housing or a mounting panel. A through hole 44 is formed in a central area of the substrate 38. The through hole 44 axially passes through the substrate 38 for mounting of the bearing holder 40. Preferably, a recessed portion 45 is formed at the central area of the substrate 38. The recessed portion 45 is recessed from a surface of the substrate 38 away from the stator 34, and a corresponding protrusion is formed on a surface of the substrate 38 facing the stator 34. The recessed portion 45 is greater than the through hole 44 in size. The through hole 44 is formed at a central area of the recessed portion 45.

The bearing holder 40 is inserted into the through hole 44 of the substrate 38 and fixedly connected with the substrate 38 by interference-fit. An outer diameter of the bearing holder 40 is equal to or slightly greater than a diameter of the through hole 44, but less than a diameter of the recessed portion 45. A bottom end of the bearing holder 40 extends radially outwardly to form a flange 48. The flange 48 has an outer diameter greater than the diameter of the through hole 44 but less than the diameter of the recessed portion 45. In assembly, the bearing holder 40 is inserted into the through hole 44 from a side of the substrate 38 opposite from the stator 34 until the flange 48 abuts against a bottom surface of the recessed portion 45 to achieve axial positioning. Preferably, the substrate 38 forms an annular flange surrounding an outer periphery of the through hole 44. The annular flange protrudes further from a protruded side of the recessed portion. Preferably, the annular flange is hollow cylindrical and is preferably concentric with the rotor 40. After the bearing holder 40 is assembled, the annular flange surrounds a portion of an outer circumference of the bearing holder 40 to improve concentricity between the bearing holder 40 and the substrate 38. Alternatively, the annular flange may be in the form of a plurality of spaced plates or poles arranged circumferentially and centered on a same axis. Alternatively, the bearing holder 40 has a cross-section of another shape, such as triangle, quadrangle, or hexagon.

In this invention, the support base 32 is formed by assembling the substrate 38 and the bearing holder 40 which are separately formed. The disc-shaped substrate 38 may be formed by punching, and the barrel-shaped bearing holder 40 is formed by sintering. As such, the substrate 38 and the bearing holder 40 each can be easily formed, and the formed substrate 38 and bearing holder 40 can also be conveniently assembled. In comparison with the die-casting process of the conventional support base, the fabrication process of the present invention is simplified, which can effectively reduce the fabrication cost.

Referring also to Fig. 4, Fig. 5, and Fig. 7, the stator 34 is fixedly attached around the bearing holder 40 of the support base 32, and an interference fit is preferably formed between the stator 34 and the bearing holder 40. The stator 34 includes a stator core 50, an insulating bracket 52 mounted around the stator core 50, windings 54 wound around the insulating bracket 52, and a circuit board 56 connected with the windings 54. Preferably, the circuit board 56 is provided with a corresponding driving circuit to supply a single phase direct current power to the windings 54 to form a single-phase brushless direct current motor.

The stator core 50 is made by stacking a plurality of laminations made of magnetic materials, such as silicon steel sheets. The stator core 50 includes an annular yoke 58, and a plurality of teeth 60 extending radially and outwardly from an outer periphery of the yoke 58. The yoke 58 is attached around the bearing holder 40 to fix the stator 10 onto the substrate 38. The teeth 60 are evenly spaced from each other along the circumferential direction of the yoke 58. Each of the teeth 60 includes a tooth body 62 connected to the yoke 58 and a tooth tip 64 formed at a distal end of the tooth body 62. The windings 54 are wound around the tooth bodies 62 and located inside the tooth tips 64. The windings 54 are separated from the tooth bodies 62 and from the tooth tips 64 by the insulating bracket 52. Preferably, the insulating bracket 52 is made of insulating plastic for avoiding short circuit of the windings 54. The tooth tips 64 are overall arc-shaped and act as magnetic poles of the stator 34 to be polarized when the windings 54 are energized. Each tooth tip 64 has an outer wall surface 65 facing the rotor 36 and acting as a pole surface of the magnetic pole of the stator 34. In this embodiment, the pole surface 65 is a circular arc surface, and the pole surfaces 65 of all tooth tips 64 are commonly located on a cylindrical surface concentric with the stator 34.

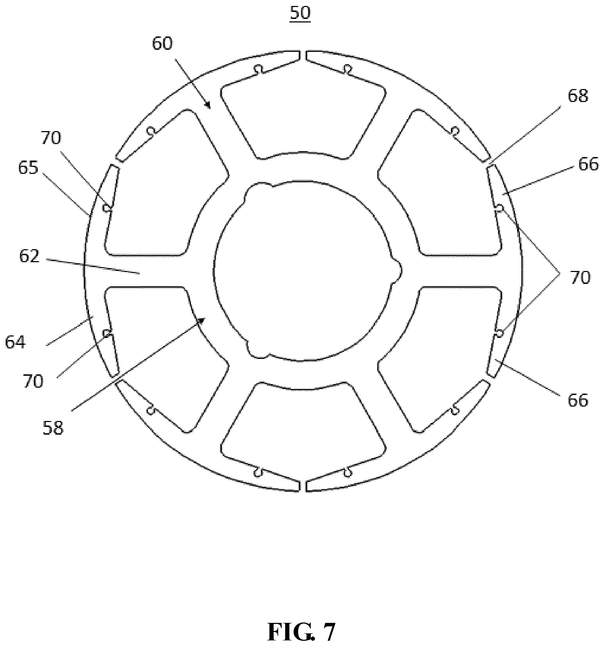

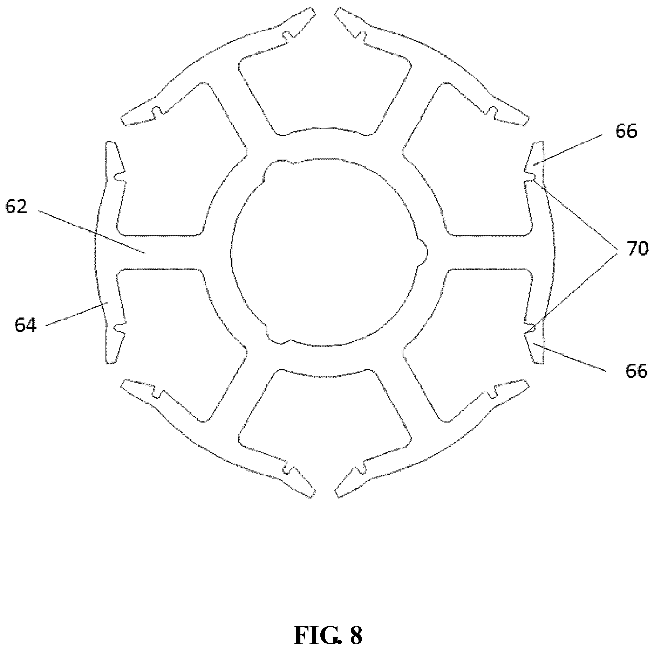

The tooth tip 64 has a greater width along a circumferential direction thereof than the tooth body 62, and two circumferential sides of the tooth tip 64 extend beyond the tooth body 62 to form two wing portions 66, respectively. Opposed distal ends of the wing portions 66 of the two adjacent tooth tips 64 are located close to but spaced from each other, with a slot opening 68 formed between the tooth tips 64. Referring to Fig. 7, in this embodiment, two cutting grooves 70 are formed in the two wing portions 66 of the tooth tip 64, respectively. Each cutting groove 70 extends from a central area of the inner wall surface of the wing portion 66 into the wing portion 66. Preferably, the cutting groove 70 has a depth that is generally a half of the radial thickness of the tooth tip 64 at the cutting groove 70, such that the cutting groove 70 does not affect the magnetic path significantly. As shown in Fig. 8, prior to winding the windings around the stator core 50, a circumferential distal section of the tooth tip 64 beside the cutting groove 70 is tilted outwardly to enlarge a gap between adjacent tooth tips 64 for facilitating winding the windings around the stator core 50. After the winding process is completed, the outer wall surface of the tooth tip 64 is forced, and the tooth tip 64 is deformed and bent inwardly, thus forming the substantially circular arc shaped pole surface 65. During this process, the gap between the tooth tips 64 decreases to form a narrow slot opening 68, and the cutting groove 70 becomes narrower, or in some embodiments even disappears.

In some embodiments, the cutting grooves 70 may be formed in connecting corner areas between the tooth tips 64 and the tooth bodies 62, which not only allows a section of greater size of the wing portions 66 to be tilted outwardly to enlarge the gap between the tooth tips 64 as much as possible, thus facilitating the winding process, but also can prevent creases of the tooth tips 64 when the tooth tips 64 are bent inwardly after the winding process is completed. Alternatively, for the two adjacent wing portions 66 at two opposite sides of each slot opening 66, only one of the two wing portions 66 is tilted outwardly prior to the winding process, the two wing portions 66 can be offset to enlarge the gap therebetween to facilitate the winding process, without the need of outwardly tilting both wing portions 66. In this invention, the tooth tips 64 of the stator core 50 are titled outwardly prior to the winding process to facilitate the winding process and later are bent inwardly to form the small slot opening 68 to effectively reduce the cogging torque, thus improving stability of the motor operation and reducing noise of the motor 30.

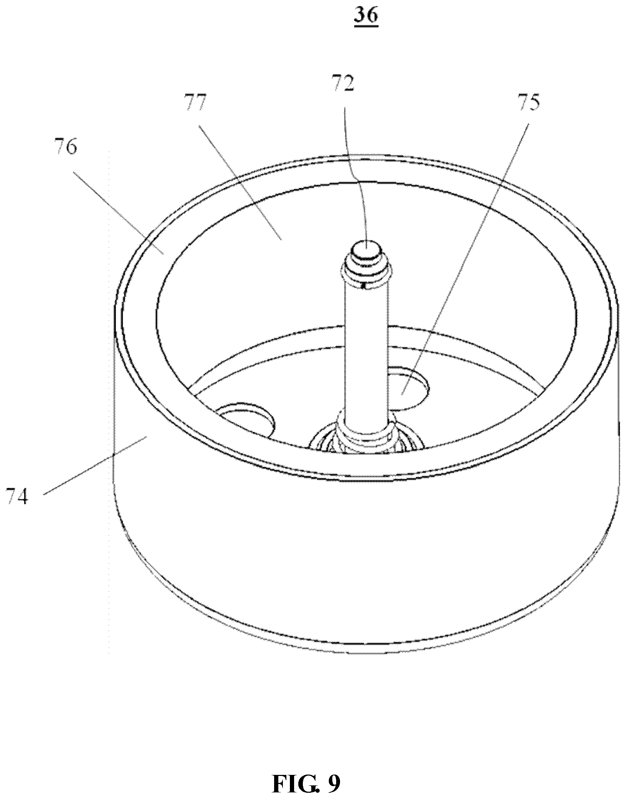

Referring to Fig. 4, Fig. 5, Fig. 9 and Fig. 10, the rotor 36 includes a rotary shaft 72, a rotor yoke 74 fixedly connected to the rotary shaft 72, and a permanent magnet 76 disposed within the yoke 74.

The rotor yoke 74 is hollow and cylindrical with an open end, which covers around the stator 34. The rotor yoke 74 defines a plurality of openings 75 through an axial end plate thereof, for allowing outside air to enter an interior of the motor 30 to cool the motor 30 itself, specifically, to cool the stator 34 received in the rotor 36. The rotary shaft 72 has one end fixedly connected to a central area of the axial end plate of the yoke 74, and the other end rotatably inserted into the bearing holder 40 of the support base 32. Preferably, a bearing 78 is disposed in the bearing holder 40 to support the rotary shaft 72 for rotation. In this embodiment, the bearing 78 is a ball bearing, and two ball bearings 78 are disposed spaced from each other axially with a spacer 79 sandwiched therebetween. The spacer 79 has an inner diameter greater than a diameter of the rotary shaft 72 and is thus radially spaced from the rotary shaft 72. The bottom end of the bearing holder 40 extends radially inwardly to form an annular flange 80 for supporting and positioning the bearing 78.

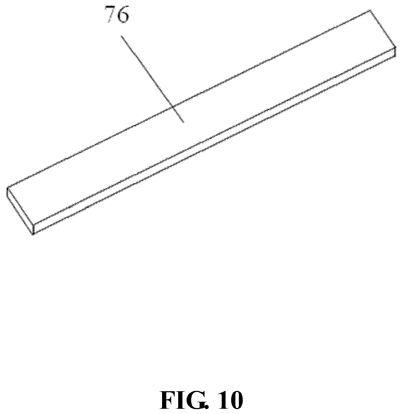

The permanent magnet 76 is attached to an inner sidewall of the yoke 74, which may be fixed to the sidewall with adhesive. In this embodiment, the permanent magnet 76 is of a circular ring structure which may be formed by bending an elongated permanent magnet as shown in Fig. 10. The permanent magnet 76 is divided into a plurality of sections along a circumferential direction of the rotor 36, with each section acting as one magnetic pole of the rotor 36, and adjacent magnetic poles having opposite polarities. An inner surface of the permanent magnet 76 acts as a pole surface 77 of the rotor 36. The pole surface 77 is a cylindrical surface that is preferably concentric with the rotor 36. In other embodiments, the permanent magnet 76 may in the form of segment pieces. Preferably, the rotor 36 and the stator 34 have the same number of magnetic poles. For example, in this embodiment, the stator 34 includes six teeth 60 forming six magnetic poles and six slots of the stator, the permanent magnet 76 of the rotor 36 correspondingly is divided into six sections and forming six magnetic poles of the rotor, and the stator 34 and the rotor 36 cooperatively form a six-pole six-slot motor. In other embodiments, the number of the slots and the number of the poles may be adjusted to be in the range of two-pole two-slot to N-pole N-slot depending upon actual requirements, which should all fall within the scope of the present invention.

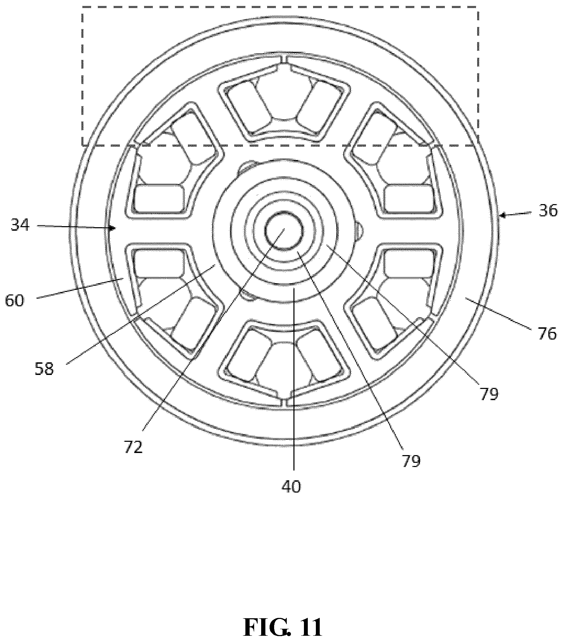

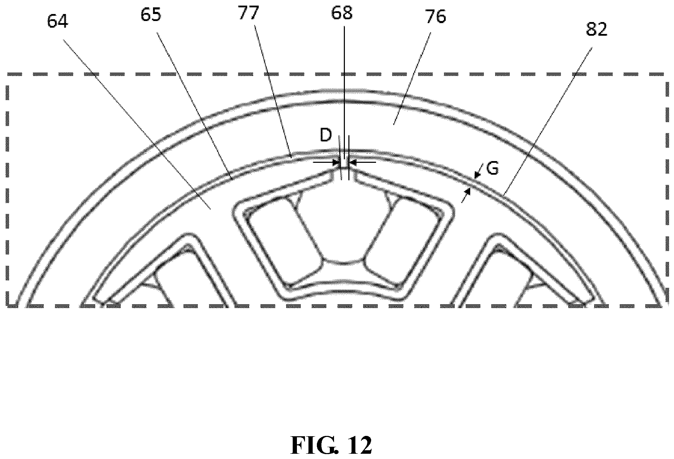

Referring to Fig. 11 and Fig. 12, after assembly, the stator 34 is attached around the bearing holder 40, the rotor 36 covers around the stator 34, the stator and rotor 34, 36 are concentric with each other, and the permanent magnet 76 surrounds the stator core 50 of the stator 34. The pole surface 77 of the permanent magnet 76 and the pole surfaces 65 of the tooth tips 64 of the stator core 50 are opposed to and spaced from each other in the radial direction, with an even air gap 82 formed therebetween. Preferably, a width D of the slot opening 68 of the stator 34 is not greater than two times of a radial width G of the air gap 82, i.e. D ≤ 2G. When the motor 30 stops rotation, a magnetic leakage field can be used to position the rotor such that a center line between two adjacent magnetic poles of the rotor 36 is substantially aligned with a center of one corresponding tooth tip 64 of the stator 34, and a center of the magnetic pole of the rotor 36 is substantially aligned with one slot opening 68 between adjacent tooth tips 64. As such, when the motor stops rotating, the rotor 36 deviates from a dead-point position (i.e. where the center of the magnetic pole of the rotor 36 is aligned with the center of the tooth tip 64 of the stator 34), and thus can easily starts to rotate when the motor 30 is energized again.

The cogging torque of the single-phase permanent magnet brushless motor configured as above can be effectively suppressed, such that the motor has improved efficiency and performance. Experimental results show that a peak of the cogging torque of a single-phase outer-rotor brushless direct current motor configured as above (with a rated torque of 1Nm, a rated rotation speed of 1000rpm, and a stack height of the stator core of 30mm) is less than 80mNm. In addition, the motor of the present invention can be designed with bidirectional startup capability to meet various requirements. For example, the bidirectional rotation can be achieved by using two position sensors such as Hall sensors and an associated controller. The motor may also be designed to start up in a single direction, in which case only one position sensor is needed.

Although the invention is described with reference to one or more embodiments, the above description of the embodiments is used only to enable people skilled in the art to practice or use the invention. It should be appreciated by those skilled in the art that various modifications are possible without departing from the spirit or scope of the present invention. The embodiments illustrated herein should not be interpreted as limits to the present invention, and the scope of the invention is to be determined by reference to the claims that follow.

## Claims

1. An outer-rotor motor comprising:
a support base (32);
a stator (34) attached to the support base (32); and
a rotor (36) rotatably mounted to the stator (34),
**characterized in that** the support base (32) comprises a substrate (38) and a bearing holder (40) separately formed and assembled together, the substrate (38) defines a through hole (44) in a central area thereof, the bearing holder (40) comprises a first end engaged with the through hole (44) and a second end protruding in a direction away from the substrate (38).

2. The outer-rotor motor of claim 1, wherein a recessed portion (45) is formed at the central area of the substrate (38), the through hole (44) is formed in a central area of the recessed portion (45), and the through hole (44) has a size less than that of the recessed portion (45).

3. The outer-rotor motor of claim 2, wherein the first end of the bearing holder (40) extends radially outwardly to form a flange (48), the bearing holder (40) is inserted into the substrate (38) from a recessed side of the recessed portion (45), and the flange (48) of the bearing holder (40) abuts against a surface of the recessed portion (45) for axially positioning the bearing holder (40) relative to the substrate (38).

4. The outer-rotor motor of claim 2 or claim 3, wherein the substrate (38) forms an annular flange at an outer periphery of the through hole (44), and the annular flange is configured to engage with the bearing holder (40) to improve concentricity between the bearing holder (40) and the substrate (38).

5. The outer-rotor motor according to anyone of claims 2 to 4, wherein two bearings (78) are disposed in the bearing holder (40), a spacer (79) is sandwiched between the two bearings (78), the spacer (79) has an inner diameter greater than an inner diameter of the bearings (78), and the first end of the bearing holder (40) extends radially inwardly to form an annular flange (80) to support the bearings (78).

6. The outer-rotor motor according to anyone of claims 1 to 5, wherein the stator (34) comprises a stator core (50) and windings (54) wound around the stator core (50), the stator core (50) comprises a yoke (58) and a plurality of teeth (60) extending radially outwardly from the yoke (58), each of the teeth (60) comprises a tooth body (62) connected with the yoke (58) and a tooth tip (64) formed at a distal end of the tooth body (62), the windings (54) are wound around the tooth bodies (62), a slot opening (68) is formed between each two adjacent tooth tips (64), the rotor (36) comprises a yoke (58) and a permanent magnet (76) attached to an inner surface of the yoke (58) of the rotor (36), an inner wall surface of the permanent magnet (76) and outer wall surfaces of the tooth tips (64) are opposed to and spaced from each other to define an air gap (82) therebetween, and a width of the slot opening (68) is not greater than two times of a width of the air gap (82).

7. The outer-rotor motor of claim 6, wherein the permanent magnet (76) is annular, the inner wall surface of the permanent magnet (76) is a cylindrical surface that is continuous in a circumferential direction thereof, the outer wall surfaces of the tooth tips (64) are located on a cylindrical surface that is concentric with the permanent magnet (76), such that the air gap (82) is even.

8. The outer-rotor motor of claim 6 or claim 7, wherein two circumferential ends of the tooth tip (64) protrude outwardly beyond two sides of the tooth body (62) to form two wing portions (66), at least one of the two adjacent wing portions (66) at two sides of each slot opening (68) is tilted outwardly before the windings (54) are wound to the tooth bodies (62), and the tilted wing portion (66) is bent inwardly after the windings (54) are wound.

9. The outer-rotor motor of claim 8, wherein a cutting groove (70) is formed in the wing portion (66) or a connecting area where the wing portion (66) is connected to the tooth body (62).

10. The outer-rotor motor according to anyone of claims 1 to 9, wherein the substrate (38) is formed by punching.

11. The outer-rotor motor according to anyone of claims 1 to 10, wherein the bearing holder (40) is formed by sintering.

12. The outer-rotor motor according to anyone of claims 1 to 11, wherein the outer-rotor motor is a single-phase motor.

13. A blower comprising:
a motor according to anyone of claims 1 to 12; and
an impeller (20) connected with the rotor (36) of the motor and driven by the motor.
